# EUROPEAN PATENT APPLICATION

(11) **EP 1 217 849 A1**
(43) Date of publication of application: **26.06.2002**
(21) Application number: 01660244.3
(22) Date of filing: 20.12.2001
(51) Int. Cl.: H04Q 7/22, H04Q 7/38, H04M 3/436, H04M 3/53

(54) **Context-based checking for examining or indicating the activity status of a called party**

(30) Priority: 21.12.2000 FI 20002814
(71) Applicant: Nokia Corporation, 02150 Espoo (FI)
(72) Inventor: Pirkola, Jani, 90120 Oulu (FI); Mäntyjärvi, Jani, 02320 Espoo (FI); Tuomela, Urpo, 90100 Oulu (FI)
(74) Representative: Kupiainen, Juhani

(57) **Abstract**

The invention relates to a method, hardware arrangement and a terminal by means of which a caller is informed of the ability of the receiving party to receive the information sent by the caller. This is accomplished by a method and an arrangement in which a user-specific activity log (12) is created so that data in the said log can be transmitted to the calling party before establishing the communications connection proper. The data may also be used as decision-making criteria when making a decision about whether or not to establish a connection with the receiving party.

## Description

The invention relates to a method for establishing and making a check for a communications connection, in which method an electrical communications connection is set up between the calling party and the called party. The invention further relates to an arrangement exploiting the method, a cellular network, and a cellular network terminal. In addition the invention relates to software means for realizing the method according to the invention.

Remembering different things at the right time and in the right place puts a considerable strain on a person's memory. Forgetting an important thing or appointment, for instance, may cause great financial damage either to the forgetter himself or to some other person or organization involved. To aid the memory, various tools have been developed such as notes, diaries, calendar programs to be used in personal computers, etc. All these known means are somehow tied to place and always dependent of the user. An entry in a diary is of no help if the user of the diary does not check the contents of the diary often enough. Sometimes another person has to perform some activity in order to make a piece of information accessible to a person. If the said another person forgets to perform that activity, it may significantly influence the decisions made by the person.

With modern telecommunications solutions it has become possible to reach a person almost anywhere or at any time. In principle, the user of a cellular phone may always be reached through his phone if the phone is on. Likewise, so-called text messages may be sent to him in cases where a direct phone contact is unwanted. However, this personal contactability has got its drawbacks, too. Since cellular phones can now be used practically all around the world, the party making the call, hereinafter referred to as the calling party or caller in short, cannot with certainty know where in the world the party receiving the call, hereinafter referred to as the called or receiving party, is at that moment. Similarly, he cannot know with certainty whether the called party is at work or occupied in leisure-time activities.

Especially it should be born in mind that the use of a telephone without a hands-free facility is prohibited under penalty in many countries. Moreover, when the hands-free facility is used, other persons in the vicinity may involuntarily hear things which a party to the call would not like to divulge to a third party. All these factors influence the attitude of the called party to the call received.

The callers, too, may be reserved as they do not know the situation in which the called party is at that particular moment. Therefore, it has become common practice to check the situation of the called party by asking it at the beginning of the call. If the call was made at an inconvenient time the parties negotiate about how a new contact will be attempted after a suitable time.

The same basic problem relates to the use of text messages or e-mail messages delivered to cellular terminals. The sending party, which hereinafter is called the sender, does not know with certainty whether the recipient can at that moment receive the message sent by the sender. Furthermore, he does not know whether the recipient is able to carry out the activity conveyed in the message. If the sender, however, knows that the recipient for some reason or other is in a situation in which he may be regarded as unwilling to receive or answer a message, the sender has to keep that in mind or write it down on a note or some other information storage means. Only when the restraint is removed at the receiver's end can the sender take measures to deliver the message. This involves the risk of forgetting the matter because of other urgent matters.

An object of this invention is to provide a novel context-based method and arrangement with which the sending party may obtain information about the activity situation of the receiving party and whether the latter is in a position to receive information sent by the sending party. An example of the checking of the activity situation could be the checking of the health status of elderly persons.

The objects of the invention are achieved by a method and arrangement in which it is created, at least within a certain group, a context-based file arrangement recording the current activity status of each member of the group. By means of the file arrangement, at least all the persons in the group are able to find out the activity status of the receiving party at that particular moment and possibly in the future.

The method according to the invention is characterized in that before establishing the communications connection proper a check is made for the calling party concerning the ability of the receiving party to receive the message sent by the sending party and, based on that information, a decision is made about the establishment of the communications connection proper.

The communications connection set-up and checking arrangement according to the invention is characterized in that it comprises user-specific activity logs.

The cellular network according to the invention is characterized in that it comprises an activity status server for storing a user-specific log.

The cellular network terminal according to the invention is characterized in that it comprises a means for monitoring activity status.

The software means according to the invention is characterized in that it can be used to realize the steps of the method according to the invention.

The dependent claims specify some advantageous embodiments of the invention.

The basic idea of the invention is as follows: A context-based file arrangement is created for a certain group of users so that real-time context-based information associated with each member of the group is collected in the said file arrangement. Data may come to this file arrangement automatically from devices used, such as cellular phones or other devices which may in one way or another examine or indicate the activity status of the person using the device. Similarly, data may come to the file arrangement concerning trips, vacations or other such factors relating to the activity status of a given person. At least each member of the group is allowed to access this file arrangement e.g. through his cellular phone. When a person wants to call or send a message to a member of the group, he dials the number, after which the file arrangement sends to the cellular phone of the calling party a message describing the current status of the called party. Thus the activity status of the receiving party can be visualized to the calling party. In addition, the activity status of the receiving party may advantageously be maintained in the phone directory of the cellular phone in which the caller/sender may in real time see the current activity status of each recipient. After that the caller may act in a way he sees fit on the basis of the information obtained. Another alternative is that the file arrangement stores e.g. the text message/speech message sent, and passes it on only after a precondition possibly set by the sender on the activity status of the called party is met.

An advantage of the invention is that the caller/sender knows prior to the establishment of the communications connection proper whether the receiving party is able to receive information at that particular moment and whether the receiving party is able to carry out actions possibly requested by the caller/sender.

Another advantage of the invention is that by means of the file system various messages can be directed to the recipient at a time and in an activity status in which it may be assumed that the receiving party is able to receive the message.

A further advantage of the invention is that the calling party may specify conditions on the establishment of the communications connection so that messages will be passed on to the recipient later on in a suitable activity status on the basis of the said conditions.

A further advantage of the invention is that the sender/caller may, if he wants to, check the activity status of a person belonging to a user group without establishing a personal communications connection proper.

A further advantage of the invention is that various messages may be sent at any time and yet the recipient will receive them at a moment which may be considered suitable to him.

A further advantage of the invention is that the receiving party will not be disturbed in a situation in which he may feel that he would be disturbed.

The invention is below described in detail. The description refers to the drawings attached, in which
- Fig. 1: shows by way of example a context-based user group according to the invention,
- Fig. 2: shows by way of example the main components of an activity log according to the invention,
- Fig. 3: shows by way of example the use of an arrangement according to the invention in call establishment, and
- Fig. 4: shows by way of example the main parts of a cellular terminal, connection of cellular terminal to cellular network, and the application of the method according to the invention in an exemplary cellular network.

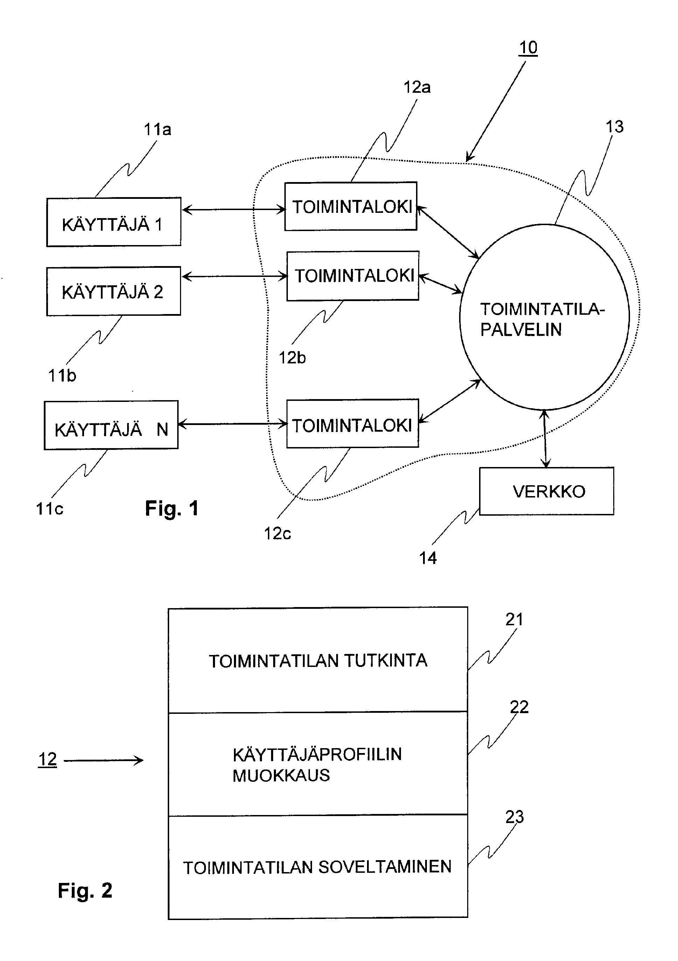

Fig. 1 shows by way of example how the context-based system according to the invention may be utilized in a telephone network. Advantageously this telephone network is an already existing or a future cellular telephone network. In the advantageous embodiment depicted in Fig. 1 a group of telephone users forms a group which hereinafter is called an activity group, reference 10. The activity group shown in Fig. 1 includes users 1, 2,..., N, references 11a, 11b and 11c. The activity group has an activity log 12a, 12b, 12c for each member of the activity group. From each activity log there is a two-way connection both to the user and advantageously to an activity status server 13 of the activity group. These connections are advantageously SMS (Short Message Service) connections or packet-switched connections such as GPRS (General Packet Radio Service) connections, whereby a speech or message connection proper need not necessarily be established by the user's terminal. Advantageously the activity status server 13 is part of a telecommunications network 14. The activity logs 12a, 12b and 12c are advantageously located in conjunction with the activity status server 13, in which case they are advantageously files in the activity status server, or alternatively in the terminal of an individual user 11a, 11b, 11c.

According to his needs an individual user may simultaneously belong to several activity groups independent of each other. Such groups are advantageously an activity group (or groups) relating to work and an activity group (or groups) relating to leisure time. With this arrangement an individual user may advantageously form bigger contact groups to whom he wants his activity status data to be sent.

Fig. 2 shows by way of example an advantageous embodiment of an activity log. The activity log 12 depicted in Fig. 2 comprises three main functions. The activity status check 21 advantageously comprises the following functions: checking the geographical location of the user, determining the time zone of the user, whether the user is in his principal place of work, how often and when the phone has been used, when the user has last used his own workstation, whether the user is in conference, on vacation, on a business trip, awake, occupied in a hobby, etc. Similarly, data may be collected indicating the current physical, mental and health status of the user. These data may be logged by means the user's phone, through various sensors in connection with the user or through the data network of the user's organization. The user may also enter the data in the activity log himself.

From the activity status data described above the second main function 22 of the activity log 12 compiles a user profile for an individual user. By means of this user profile it is possible to determine the best possible way of contacting the user at a particular moment of time and in a particular activity situation. The user profile may be either static or dynamic. In a dynamic user profile the user data are updated constantly so that the users in the same activity group have as accurate information as possible about the activity status of a given user. A user may advantageously specify in the activity status server the kind of activity status information that will be sent/passed on about him to the other users.

The third main function 23 of the activity log 12 provides information about the current activity status of a user as well as about the potential user profile. When a person wants to contact another person, he gets the receiving party's activity data at the call set-up stage through the main function 23.

The activity status server 13 is connected to all activity logs of the users in the same activity group. In an advantageous embodiment it is possible to use the activity status server to modify information delivered to different users of an activity group. This way, multiple user profiles may be created for one and the same user. Within one and the same activity status server it is naturally possible to create several completely separate activity groups. Likewise, the activity status server may advantageously be used to determine what kind of information is passed on to the terminals of persons not belonging to an activity group.

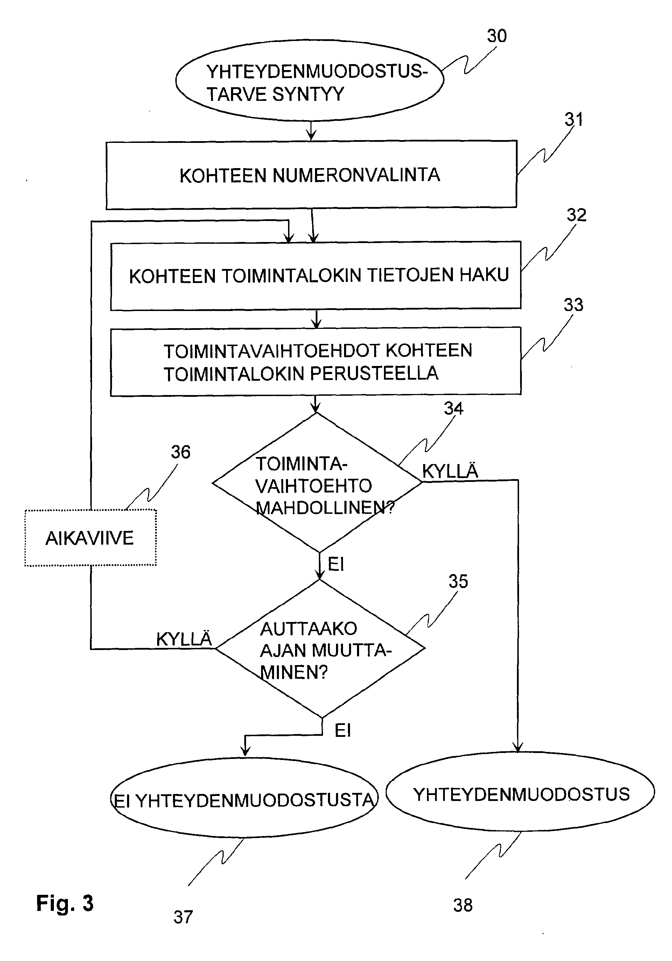

Fig. 3 shows by way of example how the context-based system according to the invention may be utilized. A communications need arises in step 30. The desired method of communication may be a speech message, text message, e-mail, music, picture or video clip or a combination of these. The target is selected in step 31. In the exemplary case of Fig. 3 the target is best represented by a telephone number allocated to him. Naturally, other ways, too, by means of which messages may be delivered, may be used to specify the target.

In step 32 the terminal of the caller/sender contacts an activity status server 13. The activity status server fetches from the activity log 12 of the called party the real-time data and sends them on to the calling party's terminal in step 33. These data advantageously include a recommendation for the best way of contacting the receiving party according to the current situation. It is also possible that the data indicate several options. In step 34 a decision is made about whether any one of the options can be used. The selection is made either by the caller personally or by the terminal automatically. If the option in question can be used immediately, the process moves on to step 38 in which a connection is immediately established with the receiving party.

If, however, it is found out in step 34 that an immediate establishment of a communications connection is out of the question, the process moves on to step 35 in which it is examined whether a connection could be established at another reasonable moment of time. If the test 35 yields a negative result, the process moves on to step 37 in which a decision is made to the effect that a connection is not attempted at all. If, however, the user profile and activity log of the receiving party indicate that a connection would be possible after a certain time, the process returns back to step 32. The return may occur immediately or advantageously after a time delay, step 36. The time delay 36 can be advantageously modified on the basis of the user profile and/or activity log of the receiving party. The new connection set-up may be realized completely automatically in some cases. For example, text messages may be sent at a moment which is known to be convenient for the receiving party.

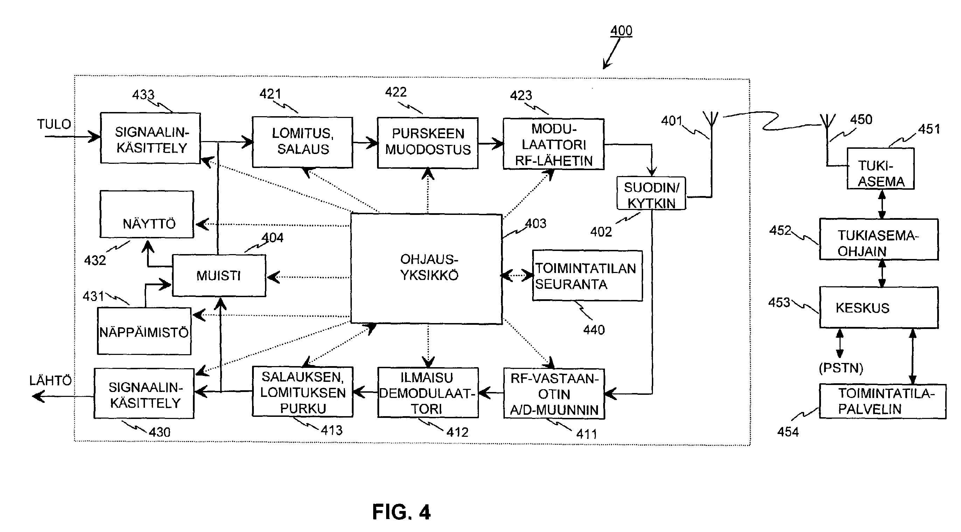

Fig. 4 shows in the form of a simplified block diagram how a context-based arrangement according to the invention can be applied in a cellular network terminal 400 and in a cellular system in connection therewith. The cellular network terminal comprises an antenna 401 to receive radio-frequency, or RF, signals transmitted by base stations. A received RF signal is conducted by a switch 402 to a RF receiver 411 where the signal is amplified and converted digital. The signal is then detected and demodulated in block 412. Block 413 performs deciphering and deinterleaving. Signal processing is then performed in block 430. The received data may be saved as such in the terminal's memory 404 or alternatively the processed packet data are transferred after signal processing to a possible external device. A control unit 403 controls the aforementioned receiving blocks in accordance with a program stored in the unit.

Transmission from a mobile station is carried out e.g. as follows. Controlled by the control unit 403, block 433 performs possible signal processing on the data, and block 421 performs the interleaving and ciphering on the processed signal to be transmitted. Bursts are generated from the encoded data in block 422 which are modulated and amplified into a transmission RF signal, block 423. The RF signal to be transmitted is conducted to an antenna 401 via switch 402. Also the aforementioned processing and transmission functions are controlled by a control unit 403. In addition, the terminal 400 comprises advantageously a keyboard 431 and display unit 432.

In the exemplary terminal 400 depicted in Fig. 4 the components essential from the point of view of the invention include the prior-art receiver blocks 411 to 413 by means of which the terminal receives, demodulates and decodes messages sent by base stations, and the transmitter blocks 421 to 423 by means of which the terminal ciphers, interleaves and transmits messages to base stations, as well as the control unit 403 which processes the data contained in the messages and controls the operation of the terminal. Advantageously the terminal 400 additionally comprises a user activity status monitoring means 440 to determine the current activity status of the user. In an advantageous embodiment, in which the activity log is part of the terminal 400, part of the memory 404 of the terminal advantageously has to be allocated to the establishment and maintenance of the activity log. In this embodiment the terminal of the calling party fetches the activity log data from the activity log of the terminal of the receiving party. Instead of the memory proper of the terminal it is naturally possible to use some other memory means in association with and detachable from the terminal, such as the known SIM card (Subscriber Identity Module). By means of the transmission blocks 421 to 423 the terminal transmits the data stored in the activity log to the base stations of the cellular network.

A software means is advantageously stored in the memory of the terminal 400 to carry out the data acquisition and decision-making procedure based on the activity status of the receiving party as described in Fig. 3.

The hardware requirements imposed by the invention on base stations and the network are rather modest as compared with the prior art. The base stations 451 and base station antennas 450 as well as the base station controllers 452 are in accordance with the prior art. A cellular network switching center 453 comprises a connection with a public switched telephone network PSTN. A connection which is essential from the invention standpoint, is established with an activity status server 454 in an embodiment according to the invention. Cellular terminals 400 update data in this activity status server from time to time or when a certain activity condition is met, in order to maintain the activity log of an individual user of a terminal. In this embodiment the terminal of the calling party fetches the activity log data of the receiving party from the activity status server 454 prior to the stage preceding the connection establishment.

The embodiments described above are naturally provided by way of example and do not limit the application of the invention. Especially it should be noted that the invention is applicable in any prior-art or future cellular network. Likewise the invention is also applicable in IP-based communications networks (the Internet) and in Bluetooth systems based on short-range RF links. Moreover, the inventional idea may be applied in numerous ways within the limits defined by the claims attached hereto.

## Claims

1. A method for establishing and making a check for a communications connection, in which method an electrical communications connection is set up between a calling party and receiving party, **characterized in that** before establishing the communications connection proper, a check is made for the calling party concerning the ability of the receiving party to receive the message sent by the calling party and, based on that information, a decision is made about the establishment of the communications connection proper.

2. A method according to claim 1, **characterized in that** the check for the calling party concerning the ability of the receiving party to receive the message of the calling party comprises steps in which
- the receiving party's number is dialled (31),
- the activity status data (32) of the receiving party are fetched from an activity log (12),
- possible options of action are presented and the best of them is selected (33),
- it is examined whether the option of action is possible (34), and
- the communications connection proper is established if the option of action is found possible (38).

3. A method according to claim 2, **characterized in that** the data representing the activity status of the receiving user are fetched from an activity status server (13).

4. A method according to claim 2, **characterized in that** if the option of action decided upon is impossible to carry out, it is checked whether the option of action can be carried out later (35).

5. A method according to claim 4, **characterized in that** if the option of action can be carried out later, the data representing the activity status of the receiving party are fetched again after a time delay (36).

6. A method according to claim 4, **characterized in that** if the option of action decided upon cannot be carried out after a time delay (36), a communications connection proper is not established (37).

7. A method according to claim 1, **characterized in that** the communications connection proper is a telephone connection.

8. A method according to claim 1, **characterized in that** the communications connection proper is a text message.

9. A communications connection set-up and checking arrangement, comprising a terminal of the calling party, terminal of the receiving party and an electrical communications connection between the two parties, **characterized in that** it further comprises user-specific (11a, 11b, 11c) activity logs (12a, 12b, 12c).

10. A communications connection set-up and checking arrangement according to claim 9, **characterized in that** it further comprises an activity status server (13, 454) connected with the user-specific activity logs (12a, 12b, 12c).

11. A communications connection set-up and checking arrangement according to claim 10, **characterized in that** the activity logs (12a, 12b, 12c) are files in the activity status server (13, 454).

12. A communications connection set-up and checking arrangement according to claim 9, **characterized in that** the activity log (12a, 12b, 12c) is a file in the terminal of the user (11a, 11b, 11c).

13. A communications connection set-up and checking arrangement according to claim 9, **characterized in that** the activity log comprises an activity status decoding function (21), user profile editing function (22) and an activity status application function (23).

14. A cellular network comprising terminals (400), base stations (451), base station controllers (452) and switching centers (453), **characterized in that** it further comprises an activity status server (454) for storing a user-specific activity log (12).

15. A cellular network according to claim 14, **characterized in that** the activity status server (454) is connected with a switching center (453).

16. A cellular network terminal (400) comprising a means for entering data in the terminal (431), data display means (432), data transmission means (421-423), data reception means (411-413), memory unit (404) and a control unit (403), **characterized in that** it further comprises an activity status monitoring means (440).

17. A terminal according to claim 16, **characterized in that** part of the memory (404) of the terminal (400) can be allocated for creating and maintaining a user-specific activity log (12).

18. A terminal according to claim 16, **characterized in that** part of the SIM card connected with the terminal (400) can be allocated for creating and maintaining a user-specific activity log (12).

19. A terminal according to claim 16, **characterized in that** it further comprises a means for displaying activity status data for the receiving party fetched from an activity status server (454).

20. A terminal according to claim 19, **characterized in that** it further comprises a means for making a decision about whether a communications connection proper will be established.

21. Software means for creating a context-based data system, **characterized in that** the said software means is arranged so as to realize the steps of the method according to claims 1 to 6.

22. An application program according to claim 21, stored on a data transfer medium, in the memory of a terminal (400), on a SIM card of a terminal, or in a cellular network device (454).
